# EUROPEAN PATENT SPECIFICATION

(11) **EP 2 450 187 B1**
(45) Date of publication and mention of the grant of the patent: **25.11.2015**
(21) Application number: 10793930.8
(22) Date of filing: 24.05.2010
(51) Int. Cl.: B32B 27/36, B05D 7/04, B05D 7/24, C08J 7/04

(54) **MULTILAYER POLYESTER FILM**
MEHRSCHICHTIGER POLYESTERFILM
FILM POLYESTER MULTICOUCHE

(30) Priority: 01.07.2009 JP 2009156530
(43) Date of publication of application: 09.05.2012
(73) Proprietor: Mitsubishi Plastics, Inc., Tokyo 103-0021 (JP)
(72) Inventor: KAWASAKI, Taishi, Maibara-shi Shiga 521-0234 (JP); FUJITA, Masato, Maibara-shi Shiga 521-0234 (JP)
(74) Representative: Ter Meer Steinmeister & Partner
(86) International application number: PCT/JP2010/058756
(87) International publication number: WO 2011/001759

(56) References cited:
- JP-A- 2007 111 923
- JP-A- 2007 130 958
- JP-A- 2008 168 487
- JP-A- 2008 179 148
- JP-A- 2008 208 223
- JP-A- 2009 084 488
- JP-A- 2010 089 308
- DATABASE WPI Week 200001 Thomson Scientific, London, GB; AN 2000-006730 XP002686478, & JP 11 286092 A (TORAY IND INC) 19 October 1999 (1999-10-19)

## Description

### TECHNICAL FIELD

The present invention relates to a laminated polyester film, and more particularly, to a laminated polyester film which is suitably used as various optical members required to exhibit good adhesion to a hand coat layer, etc., when used in a backlight unit of liquid crystal displays, etc.

### BACKGROUND ART

In recent years, polyester films have been frequently used as various kinds of optical films, e.g., employed in various applications such as an antireflection film, a touch panel, a prism sheet, a light diffusion sheet and an electromagnetic shielding film as a member of liquid crystal displays or plasma displays. A base film used for these members has been required to have excellent transparency and visibility.

These films have been often subjected to hard coating treatment for forming a hard coat as a back layer or a primer layer of the above optical films in order to enhance an anti-curling property and a mar resistance thereof, etc. In the hard coating treatment, in order to enhance adhesion between a polyester film as a base material and a hard coat layer, a coating layer having an easy-bonding property is generally provided as an intermediate layer therebetween. As the coating layer having an easy-bonding property, there are known, for example, those coating layers produced from polyester resins, acrylic resins, urethane resins or the like (Patent Documents 1 and 2).

In recent years, in the field of liquid crystal displays, there is an increasing demand for displays having a larger image screen and a higher image quality. In addition, with the considerable reduction in price of the liquid crystal displays, it has been required to achieve considerable cost-down in processing steps for a hard coat layer, etc. For this reason, there tends to occur a rapid change in construction of the hard coat layer, etc., so that it has been required to provide polyester films having an easy-bonding property which can exhibit good adhesion to various layers as well as a good wet heat resistance.

### Prior Arts

### Patent Documents

Patent Document 1: Japanese Patent Application Laid-Open (KOKAI) No. 8-281890
Patent Document 2: Japanese Patent Application Laid-Open (KOKAI) No. 2000-229395

### SUMMARY OF THE INVENTION

### Problems to be Solved by the Invention

The present invention has been accomplished to solve the above conventional problems. An object of the present invention is to provide a laminated polyester film which exhibits an excellent adhesion property to various layers such as a hard coat layer, and can be suitably used, for example, in a backlight unit of liquid crystal display, etc.

### Means for Solving Problems

As a result of the present inventors' earnest study in view of the above problems, it has been found that these problems can be readily solved by using a laminated polyester film having a specific structure. The present invention has been attained on the basis of this finding.

That is, in an aspect of the present invention, there is provided a laminated polyester film comprising a polyester film and a coating layer formed on at least one surface of the polyester film, which coating layer is produced by applying a coating solution comprising a polyester resin, an epoxy compound, an oxazoline compound and a melamine compound thereonto.

### Effect of the Invention

In accordance with the present invention, there can be provided a laminated polyester film which is excellent in adhesion to a hard coat layer and the like when laminated thereon, as well as wet heat resistance. Therefore, the present invention has a high industrial value.

### Preferred Embodiments for Carrying Out the Invention

The present invention is described in more detail below.

The polyester film constituting the laminated polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited thereto.

The polyester used in the present invention may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyester include polyethylene terephthalate or the like. On the other hand, as a dicarboxylic acid component of the copolyester, there may be mentioned at least one compound selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned at least one compound selected from the group consisting of ethylene glycol, diethylene glycol, propylene glycol, butanediol, 4-cyclohexanedimethanol and neopentyl glycol.

The polyester film used in the present invention may also comprise an ultraviolet absorber in order to prevent deterioration of liquid crystals and the like used in liquid crystal displays by irradiation with ultraviolet rays. The ultraviolet absorber is not particularly limited as long as it is a compound having a capability of absorbing an ultraviolet ray and can withstand heat applied during a process for producing the polyester film.

As the ultraviolet absorber, there are generally known an organic ultraviolet absorber and an inorganic ultraviolet absorber. In view of a good transparency, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

For the purpose of imparting an easy-slipping property to the film and preventing occurrence of flaws in the film during the respective steps, particles are preferably compounded in the polyester layer in the film of the present invention. The kinds of particles to be compounded in the polyester layer are not particularly limited as long as the particles are capable of imparting a good easy-slipping property to the film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216, Japanese Patent Application Laid-Open (KOKAI) No. 59-217755 or the like. Examples of the other heat-resistant organic particles include particles of thermosetting urea resins, thermosetting phenol resins, thermosetting epoxy resins, benzoguanamine resins, etc. Further, there may also be used deposited particles obtained by precipitating and finely dispersing a part of metal compounds such as a catalyst during the process for production of the polyester.

On the other hand, the shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester layer is usually in the range of 0.01 to 3 µm and preferably 0.1 to 2 µm. When the average particle diameter of the particles is less than 0.01 µm, the particles may fail to impart a sufficient easy-slipping property to the polyester layer, or tend to be aggregated together and therefore exhibit a poor dispersibility, which tends to result in deterioration in transparency of the resulting film. On the other hand, when the average particle diameter of the particles is more than 3 µm, the surface roughness of the obtained film tends to be too coarse, so that there tend to arise various problems when forming the hard coat layer, etc., thereon in the subsequent steps.

The content of the particles in the polyester layer is usually in the range of 0.001 to 5% by weight and preferably 0.005 to 3% by weight. When the content of the particles in the polyester layer is less than 0.001% by weight, the resulting film tends to be insufficient in easy-slipping property. On the other hand, when the content of the particles in the polyester layer is more than 5% by weight, the resulting film tends to be insufficient in transparency.

The method of adding the particles into the polyester layer is not particularly limited, and any conventionally known methods can be suitably used therefor. For example, the particles may be added at any optional stages in the process for production of the polyester constituting the respective layers of the film. The particles are preferably added to the polyester after completion of an esterification reaction or a transesterification reaction thereof.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, known additives such as an antioxidant, an antistatic agent, a thermal stabilizer, a lubricant, a dye, a pigment, etc., if required.

The thickness of the polyester film used in the present invention is not particularly limited as long as it lies within any suitable range capable of forming a film shape, and is usually in the range of 10 to 350 µm and preferably 50 to 250 µm.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the sheet,
it is preferred to enhance adhesion between the sheet and a rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched sheet is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially stretched film. Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film constituting the laminated polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the film. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

Next, the method of forming the coating layer constituting the laminated polyester film according to the present invention is explained. The coating layer may be formed by either an in-line coating method in which the surface of the polyester film is subjected to coating treatment during the stretching step of the polyester film an off-line coating method in which the polyester film once produced is transferred to an outside of the film production system and subjected to coating treatment, or by combination of these methods. Among these methods, the in-line coating method is preferably used because the coating layer can be produced simultaneously with formation of the polyester film and therefore obtained at low costs, and the thicknesses of the coating layer can be adjusted by controlling a stretch ratio of the polyester film.

For example, in the case of a sequential biaxial stretching, the in-line coating treatment may be carried out, in particular, after completion of the longitudinal stretching but before initiation of the lateral stretching, although not particularly limited thereto. When the coating layer is formed on the polyester film by the in-line coating method, the coating can be carried out simultaneously with formation of the polyester film, and the coating layer can be treated at a high temperature. As a result, it is possible to produce a film suitable as the polyester film used in the present invention.

In the present invention, it is essentially required that the polyester film is provided, on at least one surface thereof, with the coating layer which is formed by applying a coating solution comprising a polyester resin, an epoxy compound, an oxazoline compound and a melamine compound thereonto.

The coating layer formed according to the present invention is capable of enhancing an adhesion property to various surface functional layers such as a hard coat layer.

As a result of various studies, the present inventors have found that when using a polyester resin in combination with one kind of crosslinking agent such as an epoxy compound or an oxazoline compound to form a coating layer, the resulting coating layer can be enhanced in adhesion to the hard coat layer, etc. As a result of further continuous studies, the present inventors have found that a coating layer formed by using a polyester resin in combination with both an epoxy compound and an oxazoline compound exhibits a very excellent adhesion property. However, when subjected to much severer durability test, the coating layer still tends to be deteriorated in adhesion property. Thus, it has been found that when further using a melamine compound in the coating layer, the thus obtained coating layer can exhibit a stable adhesion property even after subjected to the durability test.

The polyester resin used in the present invention may be produced, for example, from the following polyvalent carboxylic acid and polyvalent hydroxy compound as main constitutional components. Examples of the polyvalent carboxylic acid include terephthalic acid, isophthalic acid, orthophthalic acid, phthalic acid, 4,4'-diphenyl dicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfo-isophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt,
and ester-forming derivatives thereof. Examples of the polyvalent hydroxy compound include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethylene oxide glycol, dimethylol-propionic acid, glycerol, trimethylol propane, sodium dimethylol-ethylsulfonate and potassium dimethylol-propionate. The respective components may be one or more compounds appropriately selected from the above exemplified compounds, and may be subjected to polycondensation reaction by an ordinary method to synthesize the polyester resin.

Upon forming the coating layer of the film according to the present invention, for the purposes of increasing a coating film strength of the obtained coating layer, allowing the coating layer to exhibit a sufficient adhesion property to various layers such as a hard coat layer, and enhancing a wet heat resistance, etc., of the film after forming these layers on the coating layer, the coating layer may further comprise as a crosslinking agent, an epoxy compound, an oxazoline compound and a melamine compound.

Examples of the epoxy compound include compounds having an epoxy group in a molecule thereof, and prepolymers and cured products of the compounds. Examples of the epoxy compound include condensates of epichlorohydrin with a hydroxyl group of ethylene glycol, polyethylene glycol, glycerol, polyglycerol, bisphenol A, etc., or an amino group. Specific examples of the epoxy compound include polyepoxy compounds, diepoxy compounds, monoepoxy compounds and glycidyl amine compounds. Examples of the polyepoxy compounds include sorbitol, polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

In particular, among these epoxy compounds, preferred are polyfunctional epoxy compounds, and more preferred are polyfunctional epoxy compounds having at least two glycidyl ether structures. Examples of the commercially available products of the epoxy compounds include "DECONAL EX-521" (as polyglycerol polyglycidyl ether) produced by Nagase Chemtex Co., Ltd., etc.

Examples of the oxazoline compound include those compounds having an oxazoline group in a molecule thereof. Especially preferred are polymers having an oxazoline group which may be in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of industrial availability thereof. The other monomers used in the copolymer are not particularly limited as long as they are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts of these acids (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

In particular, among these oxazoline compounds, preferred are those polymers having an oxazoline group on a side chain thereof. Such polymers may be readily obtained by polymerizing the addition-polymerizable oxazoline group-containing monomer with the other monomer. Examples of the commercial product of the oxazoline compound produced using an acrylic monomer as the other monomer include "EPOCROSS WS-500" and "EPOCROSS WS-300" (both produced by Nippon Shokubai Co., Ltd.) which are in the form of a polymer-type crosslinking agent in which an oxazoline group is bonded as a branched chain to an acrylic resin.

The melamine compounds are compounds having a melamine skeleton therein. Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by co-condensing a urea or the like to a part of melamine. Further, a catalyst may also be used to enhance a reactivity of the melamine compound. In particular, among these melamine compounds, preferred are alkylated melamine compounds, and more preferred are completely alkylated melamine compounds. Examples of the completely alkylated melamine compounds include hexamethoxymethyl melamine and the like.

In the laminated polyester film according to the present invention, in order to improve surface properties of the coating layer and enhance a visibility when forming various layers such as a hard coat layer on the surface of the coating layer as well as improve a transparency of the resulting film, a binder polymer other than the above polyester resin may be used in combination therewith.

The "binder polymer" used in the present invention is defined as a high-molecular compound having a number-average molecular weight (Mn) of not less than 1000 as measured by gel permeation chromatography (GPC) according to a flow scheme for evaluation of safety of high-molecular compounds (Council of Chemical Substances; November, 1985), and exhibiting a good film-forming property.

Specific examples of the binder polymer include acrylic resins, urethane resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc.

Also, for example, when forming a hard coat layer having a high transparency on the coating layer, there tend to occur remarkable interference fringes. In order to reduce occurrence of the interference fringes when forming the hard coat layer on the coating layer, it is possible to control a refractive index of the coating layer. In general, the interference fringes may be often caused owing to a low refractive index of the coating layer. Therefore,
occurrence of the interference fringes may be reduced by using a high-refractive index material in combination with the above binder polymers, etc., in the coating layer. As the high-refractive index material, there may be used conventionally known materials. In view of a capability of preventing deterioration of the adhesion property, there may be used, for example, the method of incorporating a condensed polycyclic aromatic compound in the above binder polymers. Among the binder polymers, in particular, the polyester resin is capable of incorporating a larger number of condensed polycyclic aromatic groups therein, and therefore can be more effectively used for controlling a refractive index of the coating layer.

As the method of incorporating the condensed polycyclic aromatic structure into the polyester resins, there may be used the method of introducing two or more hydroxyl groups as substituent groups into the condensed polycyclic aromatic compound to provide a diol component or a polyhydric hydroxyl group component, or the method of introducing two or more carboxyl groups as substituent groups into the condensed polycyclic aromatic compound to provide a dicarboxylic acid component or a polycarboxylic acid component.

From the standpoint of less coloration of the film upon the production process of the laminated polyester film, the condensed polycyclic aromatic compound to be contained in the coating layer is preferably a compound having a naphthalene skeleton. In addition, from the viewpoints of good adhesion to a hard coat layer or the like to be formed on the coating layer or a good transparency of the resulting film, there can be suitably used resins into which the naphthalene skeleton is incorporated as a constituting component of the polyester. Typical examples of the naphthalene skeleton include 1,5-naphthalenedicarboxylic acid, 2,6-naphthalenedicarboxylic acid and 2,7-naphthalenedicarboxylic acid.

Also, in order to improve a slipping property of the coating layer and an anti-blocking property of the resulting film, the coating layer may also comprise particles. Examples of the particles which may be contained in the coating layer include inorganic particles such as particles of silica, alumina, metal oxides and the like, and organic particles such as crosslinked polymer particles.

Further, the coating layer may also comprise various additives such as a defoaming agent, a coatability improver, a thickening agent, an organic lubricant, an antistatic agent, an ultraviolet absorber, an antioxidant, a foaming agent and a dye, if required, unless the subject matter of the present invention is adversely affected thereby.

In the present invention, the content of the above polyester resin in the coating layer is usually 20 to 85% by weight, preferably 25 to 80% by weight and more preferably 30 to 75% by weight. When the content of the polyester resin in the coating layer is less than 20% by weight, the resulting coating layer tends to be insufficient in adhesion property owing to the less content of the polyester resin component. When the content of the polyester resin in the coating layer is more than 85% by weight, the resulting coating layer tends to become brittle owing to the less content of the crosslinking agent component, and therefore tends to be insufficient in adhesion property or wet heat resistance.

In the present invention, the total content of the epoxy compound, the oxazoline compound and the melamine compound in the coating layer is usually 15 to 80% by weight, preferably 20 to 75% by weight and more preferably 25 to 70% by weight. When the total content of the epoxy compound, the oxazoline compound and the melamine compound in the coating layer is less than 15% by weight, the resulting coating layer tends to become brittle and therefore tends to be incapable of fully withstanding moisture and heat in environments. When the total content of the epoxy compound, the oxazoline compound and the melamine compound in the coating layer is more than 80% by weight, the resulting coating layer tends to be insufficient in adhesion property. In addition, the content of at least one of the epoxy compound and the oxazoline compound is preferably more than 5% by weight. When the contents of both the epoxy compound and the oxazoline compound are not more than 5% by weight, the resulting coating layer tends to be unstable in adhesion to the hard coat layer, etc., when exposed to high-temperature and high-humidity conditions for a long period of time. In addition, the weight ratio between the epoxy compound, the oxazoline compound and the melamine compound in the coating layer is usually 1 to 40: 1 to 40: 1 to 30, and preferably 3 to 30: 3 to 30: 3 to 20.

The polyester film used in the present invention may also be provided, on its surface opposed to the surface on which the above coating layer is formed, with an additional coating layer. For examples, in the case where a functional layer such as a light diffusion layer, a prism layer and a micro-lens layer is to be formed on the surface of the polyester film which is opposed to the surface on which the hard coat layer is formed, the coating layer formed on the opposite surface of the polyester film is capable of enhancing an adhesion property to such a functional layer. The coating layer formed on the opposite surface of the polyester film may comprise conventionally known components, for example, a binder polymer such as polyester resins, acrylic resins and urethane resins, a crosslinking agent such as an epoxy compound, an oxazoline compound, a melamine compound and an isocyanate compound, etc. These components or materials may be respectively used alone or in combination of any two or more thereof. In addition, the coating layer formed on the opposite surface of the polyester film may be the same as the above coating layer formed from the polyester resin, the epoxy compound, the oxazoline compound and the melamine compound (i.e., the same coating layer may be formed on both side surfaces of the polyester film).

The analysis of the components contained in the coating layer may be conducted, for example, by surface analysis such as TOF-SIMS.

When forming the coating layer by in-line coating, the laminated polyester film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvents may be used alone, or may be appropriately used in the form of a mixture of any two or more thereof.

In the laminated polyester film of the present invention, the film thickness of the coating layer formed on the polyester film is usually in the range of 0.002 to 1.0 µm, preferably 0.01 to 0.5 µm and more preferably 0.02 to 0.2 µm. When the film thickness of the coating layer is less than 0.002 µm, the resulting coating layer may fail to exhibit a sufficient adhesion property. When the film thickness of the coating layer is more than 1.0 µm, the resulting coating layer tends to be deteriorated in appearance and transparency, and the obtained laminated film tends to be deteriorated in anti-blocking property. In addition, in the case where it is required to reduce occurrence of interference fringes after forming the hard coat layer, the thickness of the coating layer is preferably in the range of 0.07 to 0.15 µm.

In the present invention, as the method of forming the coating layer, there may be used conventionally known coating methods such as a reverse gravure coating method, a direct gravure coating method, a roll coating method, a die coating method, a bar coating method and a curtain coating method.

In the present invention, the drying and curing conditions used upon forming the coating layer on the polyester film are not particularly limited. For example, in the case where the coating layer is formed in an off-line coating manner, the coating layer may be subjected to heat treatment usually at a temperature of 80 to 200°C for 3 to 40 sec and preferably at a temperature of 100 to 180°C for 3 to 40 sec.

On the other hand, in the case where the coating layer is formed in an in-line coating manner, the coating layer may be subjected to heat treatment usually at a temperature of 70 to 280°C for 3 to 200 sec.

In any of the off-line coating and in-line coating methods, the heat treatment may be used in combination with irradiation with active energy rays such as irradiation with ultraviolet rays, if required. The polyester film constituting the laminated polyester film of the present invention may be previously subjected to surface treatments such as corona treatment and plasma treatment.

In general, in the polyester film used in the present invention, a surface functional layer such as a hard coat layer may be provided on the coating layer. The material used in the hard coat layer is not particularly limited. Examples of the material of the hard coat layer include cured products of monofunctional (meth)acrylates, polyfunctional (meth)acrylates and reactive silicon compounds such as tetraethoxysilane. Among these materials, from the viewpoint of satisfying both a high productivity and a good hardness, especially preferred are cured products obtained by polymerizing compositions comprising ultraviolet-curable polyfunctional (meth)acrylates.

The compositions comprising ultraviolet-curable polyfunctional (meth)acrylates are not particularly limited. For example, there may be used a mixture comprising one or more kinds of conventionally known ultraviolet-curable polyfunctional (meth)acrylates, commercially available products as ultraviolet-curable hard coat materials, or these materials which further comprise other components in such a range that the effects of the present invention are not adversely influenced thereby.

The ultraviolet-curable polyfunctional (meth)acrylates are not particularly limited. Examples of the ultraviolet-curable polyfunctional (meth)acrylates include (meth)acrylic derivatives of polyfunctional alcohols such as dipentaerythritol hexa(meth)acrylate, tetramethylol methane tetra(meth)acrylate, tetramethylol methane tri(meth)acrylate, trimethylol propane tri(meth)acrylate, 1,6-hexanediol di(meth)acrylate and 1,6-bis(3-acryloyloxy-2-hydroxypropyloxy)hexane; polyethylene glycol (meth)acrylate; and urethane (meth)acrylate.

The other components which may be contained in the compositions comprising the ultraviolet-curable polyfunctional (meth)acrylates are not particularly limited. Examples of the other components include inorganic or organic fine particles, polymerization initiators, polymerization inhibitors, antioxidants, antistatic agents, dispersants, surfactants, light stabilizers and leveling agents. In addition, when drying the film formed by a wet coating method, an optional amount of a solvent may be added thereto, if required.

As the method of forming the hard coat layer using an organic material, there may be adopted general wet coating methods such as a roll coating method and a die coating method. The thus formed hard coat layer may be subjected to curing reaction, if required, by heating or by irradiating an active energy ray such as an ultraviolet ray and electron beam thereto.

### Examples

The present invention is described in more detail below by Examples. However, these Examples are only illustrative and not intended to limit the present invention thereto. In addition, the measuring and evaluating methods used in the present invention are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Measurement of average particle diameter (d₅₀: µm):

Using a centrifugal precipitation type particle size distribution measuring apparatus "SA-CP3 Model" manufactured by Shimadzu Seisakusho Co., Ltd., the value of a particle size corresponding to a cumulative fraction of 50% (based on the weight) in equivalent spherical distribution of the particles was measured to determine an average particle diameter thereof.

### (3) Method of measuring thickness of coating layer:

The surface of the coating layer was dyed with RuO₄ and embedded in an epoxy resin. Thereafter, the resin-embedded coating layer was cut into a piece by an ultrathin sectioning method, and dyed with RuO₄ to observe and measure a cut section of the coating layer using TEM ("H-7650" manufactured by Hitachi Ltd.; accelerated voltage: 100 V).

### (4) Method for evaluation of adhesion property:

A coating solution for a hard coat layer comprising 100 parts by mass of a resin ("KAYARAD UX-5000" produced by Nippon Kayaku Co., Ltd.), 5 parts by mass of a photopolymerization initiator ("IRGACURE 184" produced by Ciba Specialty Chemicals Corp.), 170 parts by mass of toluene and 30 parts by mass of methyl ethyl ketone was prepared, applied on a surface of the coating layer, and irradiated with ultraviolet rays to cure the resin to thereby form a hard coat layer having a thickness of 6 g/m². Thereafter, the resulting coating layer was kept under the environmental conditions of 80°C and 90% RH for 72 hr (wet heat test) and immersed in boiled hot water for 3 min or 5 min (hot water test). The thus treated hard coat layer was subjected to cross-cutting to form 100 (10 x 10) cross-cuts thereon. A 18 mm-wide tape ("Cellotape (registered trademark) CT-18" produced by Nichiban Co., Ltd.) was attached onto the hard coat layer, and then rapidly peeled off therefrom at a peel angle of 180°. Then, the surface of the hard coat layer from which the tape was peeled off was observed and the test samples after the wet heat test and hot water test were compared. The test sample where the larger area of the hard coat layer was peeled off was selected and the selected sample was rated as follows.
A: Peeled area of the hard coat layer was not more than 5% based on the larger peeled-off area thereof.
B: Peeled area of the hard coat layer was more than 5% and not more than 30% based on the larger peeled-off area thereof.
C: Peeled area of the hard coat layer was more than 30% based on the larger peeled-off area thereof.

The polyesters used in the respective Examples and Comparative Examples were prepared as follows.

### <Method for producing polyester (A)>

One hundred parts by weight of dimethyl terephthalate and 60 parts by weight of ethylene glycol as starting materials were charged together with tetrabutoxytitanate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated, and then the resulting product was subjected to polycondensation reaction for 4 hr. More specifically, the reaction temperature was gradually raised from 230°C until reaching 280°C. On the other hand, the reaction pressure was gradually reduced from normal pressure until finally reaching 40 Pa (0.3 mmHg). After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel. The resulting polymer was discharged under application of a nitrogen pressure from the reaction vessel, thereby obtaining a polyester (A) having an intrinsic viscosity of 0.63.

### <Method for producing polyester (B)>

One hundred parts by weight of dimethyl terephthalate and 60 parts by weight of ethylene glycol as starting materials were charged together with magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. The obtained reaction mixture was transferred to a polycondensation reaction vessel, and mixed with orthophosphoric acid and then with germanium dioxide, followed by subjecting the resulting mixture to polycondensation reaction for 4 hr. More specifically, the reaction temperature was gradually raised from 230°C until reaching 280°C. On the other hand, the reaction pressure was gradually reduced from normal pressure until finally reaching 40 Pa (0.3 mmHg). After initiation of the reaction, the change in agitation power in the reaction vessel was monitored, and the reaction was terminated at the time at which a viscosity of the reaction solution reached the value corresponding to an intrinsic viscosity of 0.65 on the basis of the change in agitation power in the reaction vessel. The resulting polymer was discharged under application of a nitrogen pressure from the reaction vessel, thereby obtaining a polyester (B) having an intrinsic viscosity of 0.65.

### <Method for producing polyester (C)>

The same procedure as defined in the above method for producing the polyester (A) was conducted except that silica particles having an average particle diameter of 2.0 µm in the form of a dispersion in ethylene glycol were added in an amount of 0.2 part, and the reaction was terminated at the time at which a viscosity of the reaction solution reached the value corresponding to an intrinsic viscosity of 0.66, thereby obtaining a polyester (C) having an intrinsic viscosity of 0.66.

The compounds constituting the coating layer are as follows.

### (Examples of compounds)

### ·Polyester resin (comprising a condensed polycyclic aromatic compound): (IA)

Water dispersion of a polyester resin obtained by copolymerizing the following composition:
Monomer composition: (acid component) 2,6-naphthalenedicarboxylic acid/5-sodium sulfoisophthalic acid//(diol component) ethylene glycol/diethylene glycol = 92/8//80/20 (mol%)

### ·Polyester resin: (IB)

Water dispersion of a polyester resin obtained by copolymerizing the following composition:
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

Epoxy compound: (II) polyglycerol polyglycidyl ether "DECONAL EX-521" (produced by Nagase Chemtex Co., Ltd.)
·Oxazoline compound: (IIIA) an acrylic polymer having an oxazoline group and a polyalkyleneoxide chain; "EPOCROSS WS-500" (produced by Nippon Shokubai Co., Ltd.; compound of a type comprising about 38% by weight of a 1-methoxy-2-propanol solvent)
·Oxazoline compound: (IIIB)
Oxazoline group-containing acrylic polymer "EPOCROSS WS-300" (produced by Nippon Shokubai Co., Ltd.)

### ·Melamine compound: (IV) hexamethoxymethyl melamine

### ·Particles: (V) silica sol having an average particle diameter of 65 nm

### Example 1:

A mixed raw material obtained by mixing the polyesters (A), (B) and (C) in amounts of 85%, 5% and 10%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 290°C, and then co-extruded therefrom on a cooling roll whose surface was controlled to a temperature of 40°C to form a sheet having a two-kind/three-layer structure (discharge amount: surface layer/intermediate layer/surface layer = 1:18:1), followed by cooling and solidifying the thus extruded sheet on the cooling roll, thereby obtaining an unstretched sheet. Next, the thus obtained unstretched sheet was stretched utilizing a difference between peripheral speeds of rolls at 85°C and a stretch ratio of 3.2 times in a longitudinal direction thereof. Thereafter, a coating solution 1 shown in the below-mentioned Table 1 was applied on both surfaces of the thus obtained longitudinally stretched sheet, and then the resulting sheet was introduced into a tenter where the sheet was stretched at 120°C and a stretch ratio of 3.8 times in a lateral direction thereof and then heat-treated at 225°C. Next, the obtained stretched sheet was relaxed by 2% in a lateral direction thereof, thereby obtaining a polyester film having a thickness of 188 µm which was provided on each surface thereof with a coating layer having a coating amount as shown in Table 2 (after dried).

The thus obtained polyester film was evaluated for various adhesion properties. As a result, it was confirmed that all of the adhesion properties of the polyester film evaluated were good. Various properties of the thus obtained film are shown in Table 2 below.

### Examples 2 to 8:

The same procedure as defined in Example 1 was conducted except that the composition of the coating agent was changed to those as shown in Table 1, thereby obtaining polyester films. Various properties of the thus obtained polyester films are shown in Table 2, i.e., the respective polyester films had good adhesion properties.

### Comparative Examples 1 to 5:

The same procedure as defined in Example 1 was conducted except that the composition of the coating agent was changed to those as shown in Table 1, thereby obtaining polyester films. The evaluation results of various properties of the thus obtained laminated polyester films are shown in Table 2, i.e., there were present no polyester films which were evaluated as being excellent in all of the adhesion properties.

**Table 1**

| Coating solutions | Coating agent composition (wt%) | | | | | | |
|---|---|---|---|---|---|---|---|
| | IA | IB | II | IIIA | IIIB | IV | V |
| Coating solution 1 | 67 | 0 | 10 | 10 | 0 | 10 | 3 |
| Coating solution 2 | 62 | 0 | 15 | 15 | 0 | 5 | 3 |
| Coating solution 3 | 30 | 42 | 10 | 10 | 0 | 5 | 3 |
| Coating solution 4 | 30 | 37 | 10 | 0 | 10 | 10 | 3 |
| Coating solution 5 | 47 | 0 | 20 | 20 | 0 | 10 | 3 |
| Coating solution 6 | 97 | 0 | 0 | 0 | 0 | 0 | 3 |
| Coating solution 7 | 67 | 0 | 30 | 0 | 0 | 0 | 3 |
| Coating solution 8 | 67 | 0 | 0 | 30 | 0 | 0 | 3 |
| Coating solution 9 | 67 | 0 | 0 | 0 | 0 | 30 | 3 |
| Coating solution 10 | 67 | 0 | 15 | 15 | 0 | 0 | 3 |

**Table 2**

| Examples and Comp. Examples | Coating solution | Film thickness (µm) | Adhesion properties | | |
|---|---|---|---|---|---|
| | | | After wet heat test | 3 min after hot water test | 5 min after hot water test |
| Example 1 | 1 | 0.11 | A | A | A |
| Example 2 | 2 | 0.03 | A | A | A |
| Example 3 | 2 | 0.05 | A | A | A |
| Example 4 | 2 | 0.08 | A | A | A |
| Example 5 | 2 | 0.11 | A | A | A |
| Example 6 | 2 | 0.14 | A | A | A |
| Example 7 | 3 | 0.11 | A | A | A |
| Example 8 | 4 | 0.11 | A | A | A |
| Example 9 | 5 | 0.11 | A | A | A |
| Comp. Example 1 | 6 | 0.11 | C | C | C |
| Comp. Example 2 | 7 | 0.11 | B | C | C |
| Comp. Example 3 | 8 | 0.11 | B | C | C |
| Comp. Example 4 | 9 | 0.11 | C | C | C |
| Comp. Example 5 | 10 | 0.11 | A | A | B |

### INDUSTRIAL APPLICABILITY

The film of the present invention can be suitably used in the applications requiring a good adhesion property to a hard coat layer, etc., for example, in a backlight unit of liquid crystal displays.

## Claims

1. A laminated polyester film comprising a polyester film and a coating layer formed on at least one surface of the polyester film, which coating layer is produced by applying a coating solution comprising a polyester resin, an epoxy compound, an oxazoline compound and a melamine compound thereonto.

2. A laminated polyester film according to claim 1,
wherein a content of the polyester resin in the coating layer is 20 to 85% by weight; a total content of the epoxy compound, the oxazoline compound and the melamine compound in the coating layer is 15 to 80% by weight; and a weight ratio between the epoxy compound, the oxazoline compound and the melamine compound (epoxy compound: oxazoline compound: melamine compound) is 1 to 40: 1 to 40: 1 to 30.

3. A laminated polyester film according to claim 1 or 2, wherein the epoxy compound is a polyfunctional epoxy compound.

4. A laminated polyester film according to claim 3,
wherein the polyfunctional epoxy compound is a compound having at least two glycidyl ether structures.

5. A laminated polyester film according to claim 4,
wherein the compound having at least two glycidyl ether structures is polyglycerol polyglycidyl ether.

6. A laminated polyester film according to any one of claims 1 to 5, wherein the oxazoline compound is a polymer having an oxazoline group in a side chain thereof.

7. A laminated polyester film according to claim 6,
wherein the oxazoline group-containing polymer is produced by polymerizing an addition-polymerizable oxazoline group-containing monomer with other monomer.

8. A laminated polyester film according to claim 7,
wherein the other monomer is an acrylic monomer.

9. A laminated polyester film according to any one of claims 1 to 8, wherein the melamine compound is an alkylated melamine compound.

10. A laminated polyester film according to claim 9,
wherein the alkylated melamine compound is a completely alkylated type melamine compound.

11. A laminated polyester film according to claim 10,
wherein the completely alkylated type melamine compound is hexamethoxymethyl melamine.

## Patentansprüche

1. Laminierte Polyesterfolie, umfassend eine Polyesterfolie und eine auf mindestens einer Oberfläche der Polyesterfolie gebildete Überzugsschicht, welche Überzugsschicht gebildet ist durch Aufbringen darauf einer Beschichtungslösung, umfassend ein Polyesterharz, eine Epoxyverbindung, eine Oxazolinverbindung und eine Melaminverbindung.

2. Laminierte Polyesterfolie nach Anspruch 1, wobei ein Gehalt des Polyesterharzes in der Überzugsschicht 20 bis 85 Gew.-% beträgt; ein Gesamtgehalt der Epoxyverbindung, der Oxazolinvebindung und der Melaminverbindung in der Überzugsschicht 15 bis 80 Gew.-% beträgt; und ein Gewichtsverhältnis zwischen der Epoxyverbindung, der Oxazolinverbindung und der Melaminverbindung (Epoxyverbindung: Oxazolinverbindung: Melaminverbindung) 1 bis 40: 1 bis 40: 1 bis 30 beträgt.

3. Laminierte Polyesterfolie nach Anspruch 1 oder 2, wobei die Epoxyverbindung eine polyfunktionelle Epoxyverbindung ist.

4. Laminierte Polyesterfolie nach Anspruch 3, wobei die polyfunktionelle Epoxyverbindung eine Verbindung ist, die mindestens zwei Glycidyletherstrukturen aufweist.

5. Laminierte Polyesterfolie nach Anspruch 4, wobei die Verbindung mit mindestens zwei Glycidyletherstrukturen Polyglycerolpolyglycidylether ist.

6. Laminierte Polyesterfolie nach mindestens einem der Ansprüche 1 bis 5, wobei die Oxazolinverbindung ein Polymer ist, das eine Oxazolingruppe in einer Seitenkette hiervon aufweist.

7. Laminierte Polyesterfolie nach Anspruch 6, wobei das Oxazolingruppen enthaltende Polymer hergestellt wird durch Polymerisieren eines additionspolymerisierbaren Oxazolingruppen enthaltenden Monomeren mit anderem Monomer.

8. Laminierte Polyesterfolie nach Anspruch 7, wobei das andere Monomer ein Acrylmonomer ist.

9. Laminierte Polyesterfolie nach mindestens einem der Ansprüche 1 bis 8, wobei die Melaminverbindung eine alkylierte Melaminverbindung ist.

10. Laminierte Polyesterfolie nach Anspruch 9, wobei die alkylierte Melaminverbindung eine Melaminverbindung vom vollständig alkylierten Typ ist.

11. Laminierte Polyesterfolie nach Anspruch 10, wobei die Melaminverbindung vom vollständig alkylierten Typ Hexamethoxymethylmelamin ist.

## Revendications

1. Un film de polyester laminé comprenant un film de polyester et une couche de revêtement formée sur au moins une surface du film de polyester, la couche de revêtement étant préparée en appliquant une solution de revêtement comprenant une résine de polyester, un composé époxy, un composé d'oxazoline et un composé de mélamine là-dessus.

2. Un film de polyester laminé selon la revendication 1, dans lequel un contenu de la résine de polyester dans la couche de revêtement est de 20 à 85 % en poids; un contenu total du composé époxy, du composé d'oxazoline et du composé de mélamine dans la couche de revêtement est de 15 à 80 % en poid; et un rapport de poids entre le composé époxy, le composé d'oxazoline et le composé de mélamine (composé époxy: composé d'oxazoline: composé de mélamine) est de 1 à 40: 1 à 40: 1 à 30.

3. Un film de polyester laminé selon la revendication 1 ou 2, dans lequel le composé époxy est un composé époxy polyfonctionnel.

4. Un film de polyester laminé selon la revendication 3, dans lequel le composé époxy polyfonctionnel est un composé ayant au moins deux structures d'éther de glycidyle.

5. Un film de polyester laminé selon la revendication 4, dans lequel le composé ayant au moins deux structures d'éther de glycidyle est l'éther polyglycidylique de polyglycerol.

6. Un film de polyester laminé selon l'une quelconque des revendications 1 à 5, dans lequel le composé d'oxazoline est un polymère ayant un groupe d'oxazoline en une chaîne latérale du même.

7. Un film de polyester laminé selon la revendication 6, dans lequel le polymère contenant un groupe d'oxazoline est produit en polymérisant un monomère contenant un groupe d'oxazoline polymérisable par addition avec autres monomères.

8. Un film de polyester laminé selon la revendication 7, dans lequel l'autre monomère est un monomère acrylique.

9. Un film de polyester laminé selon l'une quelconque des revendications 1 à 8, dans lequel le composé de mélamine est un composé de mélamine alkylé.

10. Un film de polyester laminé selon la revendication 9, dans lequel le composé de mélamine alkylé est un composé de mélamine de type complètement alkylé.

11. Un film de polyester laminé selon la revendication 10, dans lequel le composé de mélamine de type complètement alkylé est l'hexaméthoxyméthylmélamine.
